# EUROPEAN PATENT APPLICATION

(11) **EP 1 674 011 A2**
(43) Date of publication of application: **28.06.2006**
(21) Application number: 05291684.8
(22) Date of filing: 05.08.2005
(51) Int. Cl.: A47L 9/00

(54) **Vacuum cleaner**

(30) Priority: 22.12.2004 KR 2004110041
(71) Applicant: Samsung Gwangju Electronics Co., Ltd., Gwangju-city (KR)
(72) Inventor: Oh, Jang-Keun, Gwangju-City (KR); Han, Jung-Gyun, Busan (KR); Seo, Ji-won, Jeonrabuk-do (KR)
(74) Representative: Domenego, Bertrand

(57) **Abstract**

A vacuum cleaner has an air path for drawn air, one or more portions of which have their surfaces nano-coated with an antibiosis and sterilization material. In an embodiment, a vacuum cleaner has a suction brush with an air inlet, a dust collecting apparatus in fluid communication with the suction brush, and a body having mounting locations for a dust collecting apparatus and a motor assembly to generate suction force. One or more portions of the air path surface of the dust collecting apparatus that contacts the air is nano-coated with an antibiosis and sterilization material.

## Description

This application claims the benefit of Korean Patent Application No. 2004-110041 filed on December 22, 2004, in the Korean Intellectual Property Office, the disclosure of which is incorporated herein by reference in its entirety.

### BACKGROUND OF THE INVENTION

### Field of the Invention

The present invention relates generally to the field of vacuum cleaners, and in some embodiments, to antibiosis and sterilization functions useful in vacuum cleaners and the like.

### Description of the Related Art

Generally, a vacuum cleaner rotates a motor to generate a suction force for drawing in dust and contaminant-laden air, separates and collects dust and contaminants (hereinafter called contaminants) from the drawn air by use of a dust collecting apparatus, and discharges pure air without contaminants to the outside.

In the dust collecting apparatus that collects contaminants separated from the contaminant-laden air, germs or bacteria contained in the contaminants are gathered. Generally, the collected contaminants in the dust collecting apparatus are not immediately emptied but stored for a certain period until the contaminants fill the dust collecting apparatus. Germs or bacteria present in the contaminants collected in the dust collecting apparatus propagate and, therefore, must be sterilized.

To meet the above needs, a material having an antibiosis and sterilization function is added to a raw plastic material during manufacture of the dust collecting apparatus. For example, nano-particles such as silver having an antibiosis and sterilization function are added to a raw plastic material for manufacturing a dust collecting apparatus through injection molding. The resulting dust collecting apparatus is able to provide an antibiosis and sterilization function.

The method for adding nano-silver particles to a raw plastic material when manufacturing a dust collecting apparatus as mentioned above, however, increases manufacturing costs. If a dust collecting apparatus is molded with a raw plastic material containing nano-silver particles, the particles in the mold that do not directly contact contaminant-laden air do not contribute to the antibiosis and sterilization effect. In order to create a sufficient concentration of nano-silver particles on the surface of the dust collection apparatus that directly contacts contaminant-laden air, the overall concentration of nano-silver particles in the raw plastic material must be sufficiently high. It is therefore necessary to add a large quantity of nano-silver particles to the raw plastic material. The amount of nano-silver particles within the dust collecting apparatus that does not contribute to the antibiosis and sterilization function is greater than the amount of nano-silver particles on an inner surface of the dust collecting apparatus which directly contacts contaminant-laden air or contaminants.

Additionally, an increased quantity of nano-silver particles added to raw plastic material tends to decrease productivity of injection molding and reduces strength of the resulting parts.

In other words, it is difficult to obtain effective antibiosis and sterilization function with the conventional method for adding nano-silver particles to a raw plastic material.

### SUMMARY OF THE INVENTION

In an exemplary embodiment, a vacuum cleaner is provided with a sufficient antibiosis and sterilization effect while using a relatively small quantity of nano-particles of an antibiosis and sterilization material as compared to a conventional method.

In some embodiments, a vacuum cleaner operates with an antibiosis and sterilization effect without requiring addition of nano-particles of antibiosis and sterilization material to a raw plastic material forming a dust collecting apparatus. In this manner, injection molding productivity and strength of the resulting parts are maintained at a high level.

In exemplary embodiments, these and other advantages that will be apparent on review of the disclosure are achieved by providing a vacuum cleaner comprising a suction brush having an air inlet; a dust collecting apparatus fluidly communicated with the suction brush that separates and collects contaminants from drawn air; a motor assembly generating a suction force; and a body partitioned into a dust collecting chamber where the dust collecting apparatus is mounted and a motor chamber where the motor assembly is mounted, wherein the surface of the air path of the dust collecting apparatus contacting air drawn via the air inlet is nano-coated with an antibiosis and sterilization material.

In the dust collecting apparatus, surfaces where a filter is mounted and surfaces where collected contaminants are accumulated may be nano-coated with the antibiosis and sterilization material.

When a dust bag is applied to the dust collecting apparatus, the inner surface of the dust collecting chamber is nano-coated with the antibiosis and sterilization material.

The antibiosis and sterilization material is comprised of silver and is nano-coated using a chemical vapor deposition (CVD) method.

In further embodiments, a vacuum cleaner comprises: a suction brush having an air inlet; a dust collecting apparatus fluidly communicated with the suction brush that separates and collects contaminants from drawn air; a motor assembly generating a suction force; and a body partitioned into a dust collecting chamber where the dust collecting apparatus is mounted and a motor chamber where the motor assembly is mounted, wherein inner surfaces of the air inlet, the air inlet path of the suction brush contacting the air, the inner surfaces of the air path connecting the suction brush and the dust collecting apparatus, and the air path surfaces of the dust collecting apparatus, are nano-coated with an antibiosis and sterilization material.

The surface of the motor chamber of the body contacting air drawn from the dust collecting chamber may be nano-coated with the antibiosis and sterilization material.

As described above, because only the surfaces that the drawn air contacts are nano-coated with an antibiosis and sterilization material such as silver, a reduced amount of antibiosis and sterilization material can be used to achieve a desired antibiosis and sterilization effect, as compared to a vacuum cleaner that incorporates antibiosis and sterilization material through conventional means.

Additionally, in embodiments where only the surfaces of the dust collecting apparatus that come into contact with contaminant-laden air are nano-coated with the antibiosis and sterilization material, injection-molding productivity and strength of the resulting structures are enhanced.

### BRIEF DESCRIPTION OF THE DRAWINGS

The above and other aspects, features and advantages of the present invention will be more apparent from the following detailed description taken with reference to the accompanying drawings in which:

FIG 1 is a perspective view of a cyclone dust collecting apparatus which is an example of a dust collecting apparatus of a vacuum cleaner according to an embodiment of the present invention;

FIG 2 is an exploded perspective view for explaining a nano-coated portion with an antibiosis and sterilization material of the cyclone dust collecting apparatus of FIG 1;

FIG. 3 is a cross-sectional view of the cyclone dust collecting apparatus of FIG. 1;

FIG. 4 is a perspective view of a bagless dust collecting apparatus for a vacuum cleaner according to another embodiment of the present invention;

FIG. 5 is an exploded perspective view for explaining a nano-coated portion with an antibiosis and sterilization material of the bagless dust collecting apparatus of FIG. 4;

FIG 6 is a cross-sectional view of a vacuum cleaner body with a dust bag for a vacuum cleaner as a dust collecting apparatus according to yet another embodiment of the present invention; and

FIG 7 is a view for explaining an air path nano-coated with an antibiosis and sterilization material of a canister type vacuum cleaner according to yet another embodiment of the present invention.

### DETAILED DESCRIPTION OF THE EXEMPLARY EMBODIMENTS

Certain embodiments of the present invention will be described in greater detail with reference to the accompanying drawings.

In the following description, drawing reference numerals are used for the same elements even in different drawings. The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention with unnecessary detail.

A vacuum cleaner generates a suction force to draw in air and separates and collects dust and contaminants (hereinafter called contaminants) from the drawn air to perform cleaning. The vacuum cleaner comprises a suction brush having an air inlet for drawing in air, a dust collecting apparatus fluidly communicated with the suction brush that separates and collects contaminants from the drawn air, and a cleaner body partitioned into a dust collecting chamber in which the dust collecting apparatus is mounted and a motor chamber in which a motor assembly generating a suction force of air is mounted.

The suction brush directly contacts a surface to be cleaned, and comprises an air inlet provided in a lower surface that draws in contaminant-laden air, and an air inlet path in which the air drawn via the air inlet flows. The inside of the air inlet and the air inlet path in which the drawn air flows may be selectively nano-coated with an antibiosis and sterilization material. The air inlet path is connected with an air inflow unit which fluidly communicates with the suction brush and the dust collecting apparatus. The air inflow unit comprises various structures depending on the type of vacuum cleaner. For instance, an extension pipe assembly generally connects a suction brush and a dust collecting apparatus in a canister type vacuum cleaner for air drawn in the suction brush to flow into the dust collecting apparatus. In an upright type vacuum cleaner, a lead-in hose mounted at a vacuum cleaner body connects a suction brush and a dust collecting apparatus. The surface where the drawn air contacts and flows can be selectively nano-coated with an antibiosis and sterilization material.

The dust collecting apparatus separates and collects contaminants from air, and may include a cyclone dust collecting apparatus, a bagless dust collecting apparatus or a dust bag therein. The inside of the dust collecting apparatus where the drawn air flows and the inside portion where contaminants separated from the drawing air are gathered are nano-coated with an antibiosis and sterilization material. 'Antibiosis and sterilization material' means a material killing or hindering growth of bacteria and microorganisms, for example, in the range of 1nm~100nm in size. Silver is a representative example of the antibiosis and sterilization material. 'Nano-coating' means coating a surface of a particular element of a device such as a dust collecting apparatus necessary to performing an antibiosis and sterilization function with nano-sized particles of antibiosis and sterilization material. The nano-coating methods typically used are chemical vapor deposition (CVD), liquid-phase synthesis methods, and other appropriate techniques. The detailed description thereof will be omitted since the CVD and the liquid-phase synthesis method are well-known technologies. The terms antibiosis and sterilization material and nano-coating will be used hereinafter in the same meaning as described above.

Surfaces nano-coated with an antibiosis and sterilization material vary depending on the type of dust collecting apparatus in use, and this will be described in greater detail with reference to the accompanying drawings.

First, a surface nano-coated with an antibiosis and sterilization material will be described in an exemplary application to a cyclone dust collecting apparatus.

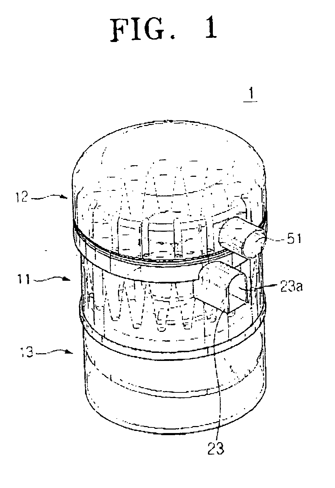

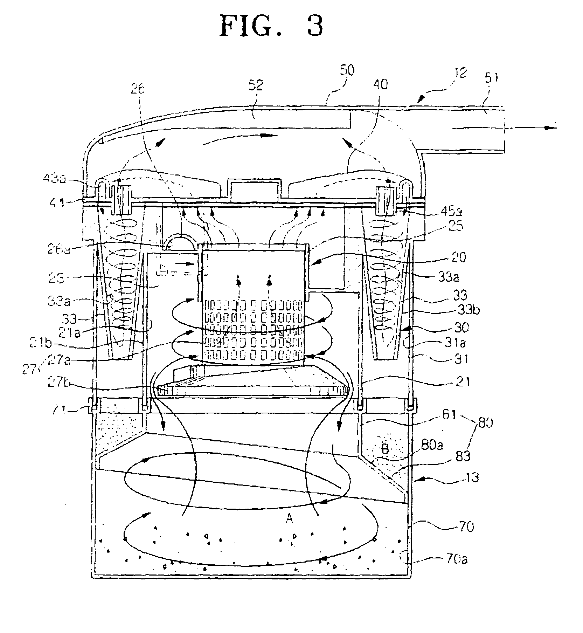

Referring to FIGS. 1 to 3, a cyclone dust collecting apparatus 1 comprises a multi cyclone unit 11, a cover unit 12 connected to the top portion of the multi cyclone unit 11, and a contaminants collection unit 13 connected with the bottom portion of the multi cyclone unit 11.

The multi cyclone unit 11 comprises a primary cyclone 20 and a secondary cyclone 30 arranged concentrically around the primary cyclone 20.

The primary cyclone 20 comprises a cylindrical inner case 21, a suction port 23 for drawing air into the inner case 21, and a grille member 27 connected with an air outlet 25 of the inner case 21. The inner case 21 is integrally formed with an outer case 31 which will be explained below. The bottom of the inner case 21 is open, and the top thereof is open to connect with the air outlet 25. The air outlet 25 is configured to have smaller diameter than that of the inner case 21. An air guide wall 26 connects the air outlet 25 and the inner case 21. The air guide wall 26 is configured in a predetermined length to have gradually decreasing height from the outside of the air outlet 25 and to extend circumferentially in a spiral configuration. The air guide wall 26 comprises a domed top portion and a flat bottom portion. The domed top portion of the air guide wall 26 is connected with the suction port 23. The suction port 23 guides contaminant-laden air into the inner case 21. The suction port 23 is connected from the outside of the outer case 31 to the inner case 21. In the embodiment shown, the suction port 23 is in the shape of a non-circular cylinder, and the top wall of the suction port 23 is connected with the air guide wall 26. Air enters via the suction port 23 and the air guide wall 26 flowing into the inner case 21 and is guided to gradually move downward and to form a rotating air stream such that a centrifugal force operates on the drawn air. The grille member 27 prevents relatively large contaminants centrifugally separated in the inner case 21 from flowing backward and moving out via the air outlet 25. The grille member 27 comprises a body 27a having a plurality of minute pores and a skirt 27b engaged with the bottom portion of the body 27a. The body 27a has an open top portion and is cylindrical. The top of the body 27a is connected with the air outlet 25. The bottom portion of the body 27a is closed, and the skirt 27b extends along the outer circumference of the bottom portion. The skirt 27b has a smaller diameter than that of the inner case 21 and a larger diameter than that of the body 27a. The skirt 27b prevents contaminants centrifugally separated in the inner case 21 from flowing backward. Accordingly, constituent parts of the air path which directly contact the incoming air, such as the inner surface 23a of the suction port 23, the bottom surface of the air guide wall 26, the inner surface 21 a of the inner case 21, and the outer surface of the grille member 27 in the primary cyclone 20, may be nano-coated with an antibiosis and sterilization material.

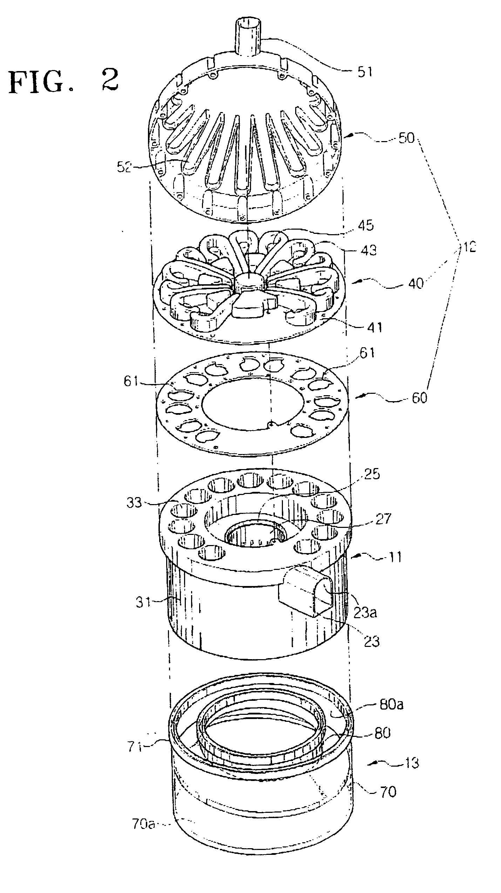

The secondary cyclone 30 comprises a plurality of cone members 33 arranged circularly at the outside of the inner case 21, and the outer case 31 covering the cone members 33. Secondary cyclone 30 uses a space between the inner case 21 and the outer case 31 as a dust-collecting place. The cone members 33 in secondary cyclone 30 each have an open top and an open bottom portion. Air passing through cone members 33 forms a rotating air stream that descends from the top portion of the cone members 33. The air then ascends to exit cone members 33, and fine dust particles in the air are centrifugally separated, dropping out of the bottom portion of the cone members 33. The secondary cyclone 30 is concentrically formed around the primary cyclone 20 in a multi cyclone structure, and the plurality of cone members 33 of the secondary cyclone 30 are formed to cover at least one portion of the outside of the primary cyclone 20. Referring to FIG 2, a plurality of cone members 33 of secondary cyclone 30 are positioned at intervals along the outer circumference of primary cyclone 20 except for a portion where the suction port 23 is formed. The secondary cyclone 30 is integrally formed with the primary cyclone 20. In an embodiment, the inner case 21 and the outer case 31, the cone members 33, and the suction port 23 are integrally formed. Accordingly, an inner surface 33a of the plurality of cone members 33 and the inner surface 31a of the outer case 31 directly contacting the drawn air in the secondary cyclone 30 are nano-coated with an antibiosis and sterilization material. The outer surfaces 33b of the plurality of cone members 33 and the outer surface 21b of the inner case 21 may be additionally nano-coated with an antibiosis and sterilization material.

The cover unit 12 comprises a first cover 40, a second cover 50 and a gasket 60. The first cover 40 guides air via the primary cyclone 20 flowing into each of the plurality of cone members 33 forming the secondary cyclone 30. The first cover 40 is engaged with the top portion of the multi cyclone unit 11, and a gasket 60 is disposed between the first cover 40 and the top portion of the multi cyclone unit 11. The first cover 40 comprises a plate-type cover body 41, a plurality of centrifugal paths 43 circularly arranged with respect to the center of the cover body 41, and a discharge hole 45. The centrifugal path 43 forms the air discharged to the air outlet 25 of the primary cyclone 20 into a rotating air stream to guide the rotating air stream to an entrance of the upper portion of the cone members 33 of the secondary cyclone 30. In other words, the air via the air outlet 25 of the primary cyclone 20 ascending toward the center of the cover body 41 is scattered and moved along the plurality of centrifugal paths 43 in all directions, and flows in each of the cone members 33 as the rotating air stream. The cleaned air, removed of fine dust by the centrifugal force of the rotating air stream of the cone member 33 of the secondary cyclone 30, ascends and is expelled via the discharge hole 45. The air discharged via the discharge hole 45 is exhausted to an exhaust port 51 along a guide path 52 in the second cover 50. The second cover 50 is engaged to cover the top portion of the first cover 40 and gathers air exhausted from each of the discharge holes 45 to discharge it to the outside. The gasket 60 has openings 61 corresponding to each of the cone members 33 of the secondary cyclone 30. The openings 61 are configured at a certain interval to be aligned with the discharge holes 45. The openings are non-circular and guide air to increase a centrifugal force of air stream flowing out of the centrifugal path 43. The air path surface of the cover unit 12 in contact with the drawn air is nano-coated with an antibiosis and sterilization material. More particularly, the top surface of the first cover 40 in which the air discharged from the discharge holes 45 flows, and the guide paths 52 of the second cover 50 are nano-coated with an antibiosis and sterilization material. A portion 45a connected with the cone members 33 of the bottom surface of the first cover 40 and an inner surface 43a of the centrifugal path 43 are also nano-coated with an antibiosis and sterilization material.

The contaminant collecting unit 13 is detachably mounted to the bottom portion of the multi cyclone unit 11. The contaminant collecting unit 13 comprises two spaces A and B partitioned to separately collect relatively large contaminants and fine dust which are centrifugally separated each from the primary and secondary cyclones 20 and 30. The contaminant collecting unit 13 comprises a main receptacle 70 and a partition member 80 in the main receptacle 70. The main receptacle 70 has the same outer diameter as that of the outer case 31, and includes an engagement part 71 engaged with the bottom portion of the outer case 31. The isolation member 80 comprises a cylindrical inner body 81 connected with the bottom portion of the inner case 21, and a skirt part 83 extended from the lower end of the inner body 81 and connected with the inside of the main receptacle 70. In the first space A, formed by the inside of the isolation member 80 and the lower portion of the main receptacle 70, relatively large contaminants separated from the primary cyclone 20 are collected. The second space B, formed by the outside of the isolation member 80 and the upper portion of the main receptacle 70, is connected with the secondary cyclone 30. Fine dusts, centrifugally-separated from the cone members 33 of the secondary cyclone 30, are collected in the second space B. As such, the inside 70a of the first space A and the inside 80a of the second space B, which contact drawn air and collect separated contaminants therein, are nano-coated with an antibiosis and sterilization material in the contaminants collecting unit 13.

The operation of separating and collecting contaminants of the cyclone dust collecting apparatus 1 having aforementioned structure will be explained hereinafter.

Referring to FIGS. 1 to 3, contaminant-laden air flows in via the suction port 23. The flowing air is guided by the air guide wall 26 to form a rotating air stream and flows into the inner case 21. Relatively large contaminants are separated from the air by a centrifugal operation of the rotating air stream and fall to be collected into the first space A of the main receptacle 70. Air passes through the grille member 27 and is expelled via the air outlet 25. The air ascending via the air outlet 25 collides with the first cover 40 and spreads to be led into the multiple cone members 33 of the secondary cyclone 30 along a plurality of the centrifugal paths 43. The air led in the cone members is guided into a rotating air stream according to the configuration of the centrifugal paths 43, and therefore, a further centrifugal operation occurs in the secondary cyclone 30. Accordingly, fine dust that was not separated in the primary cyclone 20 is separated and falls from the drawn air in each of the cone members 33 of the secondary cyclone 30, and the drawn air is discharged toward the second cover 50 via the discharge hole 45 of the first cover 40. The fine dust separated in the secondary cyclone 30 is accumulated in the second space B of the main receptacle 70. The air discharged via the discharge holes 45 of the first cover 40 streams out in a predetermined path via the exhaust port 51 along a guide path 52 of the second cover 50. The exhaust port 51 fluidly communicates with a motor assembly (not shown). Because the surfaces of the air path which directly contact air flowing into the primary and secondary cyclones 20 and 30 of the dust collecting apparatus 1 are nano-coated with an antibiosis and sterilization material as mentioned above, bacteria in the intake air are removed. The insides 70a and 80a of the contaminants collecting unit 13 are also nano-coated, and therefore, bacteria in the collected contaminants are sterilized.

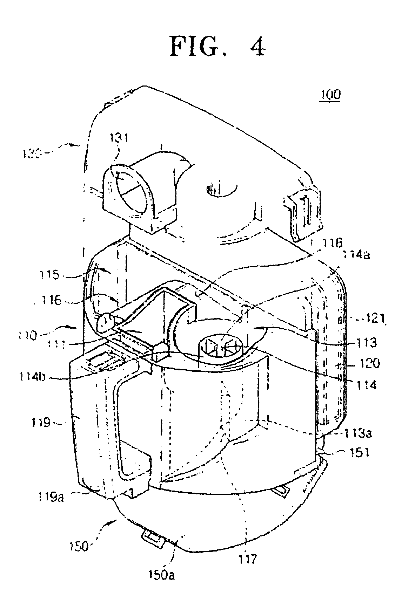

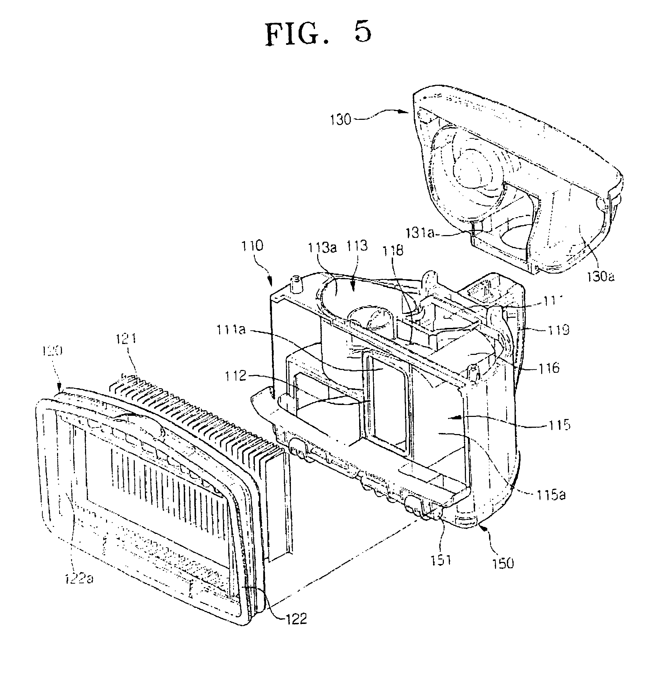

Next, an exemplary application of a nano-coated surface to a bagless dust collecting apparatus will be described. The bagless dust collecting apparatus also separates and collects contaminants using centrifugal force of an air current, as does a cyclone dust collecting apparatus. In the case of the bagless dust collecting apparatus, typically a dust collecting part is arranged in parallel with a cyclone part. FIGS. 4 and 5 show examples of the bagless dust collecting apparatus.

Referring to FIGS. 4 and 5, a bagless dust collecting apparatus 100 comprises a cover unit 130, a bagless body 110 and a door unit 150.

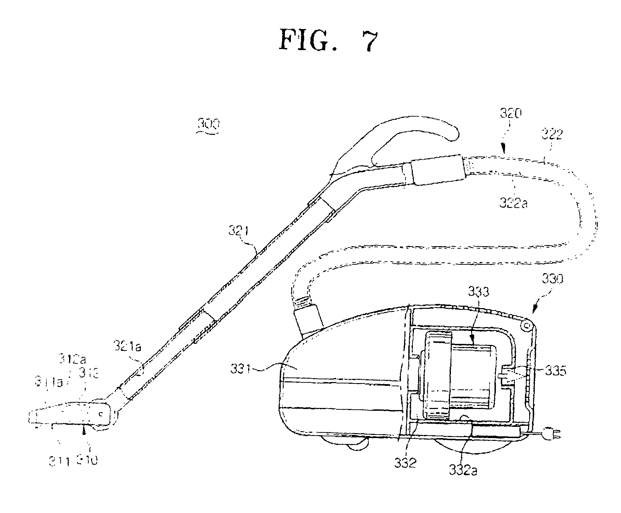

The cover unit 130 is detachably mounted to a top portion of the bagless body 110. By separating the cover unit 130 from the bagless body 110, a user can have easy access to a cyclone part 113 and a dust collecting part 115 provided in the bagless body 110 so that repair or maintenance operation is easy. As the cover unit 130 is mounted to the top portion of the bagless body 110, a contaminant-transfer path 118 is accordingly defined which connects the cyclone part 113 and the dust collecting part 115. Accordingly, contaminants, when centrifugally-separated from drawn air in the cyclone part 113, move into the dust collecting part 115 via the contaminant-transfer path 118. A suction part 131 may be integrally, or separately formed with the cover unit 130 at a center of the front side of the cover unit 130. The suction part 131 fluidly communicates with an air inflow unit (not shown). For example, if an extension pipe assembly 320 (refer to FIG 7) is applied as the air inflow unit (not shown), the suction part 131 leads air to sequentially flow via a suction brush 310 (refer to FIG. 7), an extension pipe 321 (refer to FIG 7) and a flexible hose 322 (refer to FIG 7) into the bagless dust collecting apparatus 100. Accordingly, inner surfaces 130a and 131a of the cover unit 130 and the suction part 131 which contact the drawn air, are nano-coated with an antibiosis and sterilization material.

The bagless body 110 comprises the cyclone part 113, the dust collecting part 115, a connection path 111, a discharge part 114, a discharge filter part 120, and a handle 119.

The connection path 111 is configured in the middle of the bagless body 110 and guides air flowing into the suction part 131 to flow into the cyclone part 113. A mesh mount opening 112, in which a mesh filter for filtering fine dust is mounted, is configured at the connection path 111. The inner surface 111a of the connection path 111 contacting the drawn air and a portion around the mesh mount opening 112 in which the mesh filter is mounted are nano-coated with an antibiosis and sterilization material.

The cyclone part 113 is configured at one side (right side of the connection path in FIG. 4) based on the connection path 111 in the bagless body 110, and takes the shape of a spiral which causes the intake air to form a rotating air stream. A leading path 117 is provided at the lower portion of the cyclone part 113, which guides flowing air via the suction part 131 and the connection path 111 to stream into the cyclone part 113. Contaminants in the air flowing into the cyclone part 113 are separated from the air by a centrifugal force. The air flowing in is in direct contact with the inner surface 113a of the cyclone part 113, and therefore, the inner surface 113a of the cyclone part 113 is nano-coated with an antibiosis and sterilization material.

The discharge part 114 takes the shape of a circular pipe in cross-section, protrudes at a certain height from the center of the cyclone part 113, and discharges the air from which contaminants have been removed to the discharge filter part 120. The discharge part 114 may be integrally or separately formed with the cyclone part 113. The air flows to contact the outer surface 114b of the discharge part 114 as well as the inner surface 113a of the cyclone part 113. Therefore, the outer surface 114b of the cyclone part 113 is nano-coated with an antibiosis and sterilization material. Because cleaned air flows over the inner surface 114a of the discharge part 114, the inner surface 114a of the discharge part 114 may also be nano-coated with antibiosis and sterilization material if necessary.

Referring to FIG. 4, the dust collecting part 115 is configured at the left side based on the connection path 111, in parallel with the cyclone part 113 of the bagless body 110, and collects contaminants separated from the cyclone part 113 via the contaminant-transfer path 118. A curved barrier member 116 bends downward at one side of the dust collecting part 115 to prevent the collected contaminants from flowing backward into the cyclone part 113. The dust collecting unit 115 has an open bottom, and therefore, contaminants collected in the dust collecting part 115 fall by gravity and are removed when a door unit 150 is opened. The inner surface 115a of the dust collecting part 115 directly contacting contaminants is nano-coated with an antibiosis and sterilization material.

The discharge filter part 120 is mounted to a rear side of the bagless body 110, and filters air flowing via the mesh filter of the connection path 111 and air flowing via the discharge part 114. The discharge filter part 120 fluidly communicates with a motor chamber 332 (refer to FIG. 7), and therefore, air flowing via the discharge filter part 120 flows to a motor assembly 333 (refer to FIG. 7). The discharge filter part 120 comprises a filter 121 and a filter housing 122 extended from the bagless body 110 and the filter is mounted thereto. The inner surface 122a of the filter housing 122 contacting the filter 121 is nano-coated with an antibiosis and sterilization material.

The handle 119 takes on the configuration of a flattened U, is mounted to the front side of the bagless body 110, and is provided for the user's grasp when the user separates the bagless dust collecting apparatus 100 from the vacuum cleaner body 330. Additionally, a button 119a is mounted to a lower portion of the handle 119 to open and close the door unit 150.

The door unit 150 is mounted to the bottom portion of the bagless body 110 using a hinge 151 which allows it to be opened and closed. When the door unit 150 is opened, bottom portions of the connection path 111 and the dust collecting part 115 are opened such that contaminants collected in the connection path 111 and the dust collecting part 115 fall by gravity and are discharged. Accordingly, the upper surface 150a of the door unit 150 forming the bottom surface of the connection path 111 and the dust collecting part 115 may be nano-coated with an antibiosis and sterilization material.

In the bagless dust collecting apparatus 100 having the above structure, air flowing into the suction brush 310 (refer to FIG 7) is led into the bagless dust collecting apparatus 100 via the suction part 131. A portion of air led into the suction part 131 is discharged to the discharge filter part 120 via the mesh filter of the connection path 111, and the remaining air is led into the cyclone part 113. Contaminants in the air flowing into the cyclone part 113 3 are separated and collected via the contaminant-transfer path 118 into the dust collecting part 115 by centrifugal force. The air, with contaminants removed, is discharged to the discharge filter part 120 via the discharge part 114. Surfaces of paths where air in the bagless dust collecting apparatus 100 flows may be nano-coated with an antibiosis and sterilization material as mentioned above, and therefore, bacteria in the air are sterilized and removed. The inner surface 115a of the dust collecting part 115 is nano-coated with an antibiosis and sterilization material, and therefore, bacteria in the collected contaminants are also sterilized. The air flowing out of the discharge filter part 120 of the bagless dust collecting apparatus 100 is discharged to the outside of the cleaner body 330 (refer to FIG 7) via the motor assembly 333 (refer to FIG 7) of the motor chamber 332 (refer to FIG 7).

Finally, nano-coating surfaces with an antibiosis and sterilization material will be explained with respect to the case where a dust bag is applied for a dust collecting apparatus.

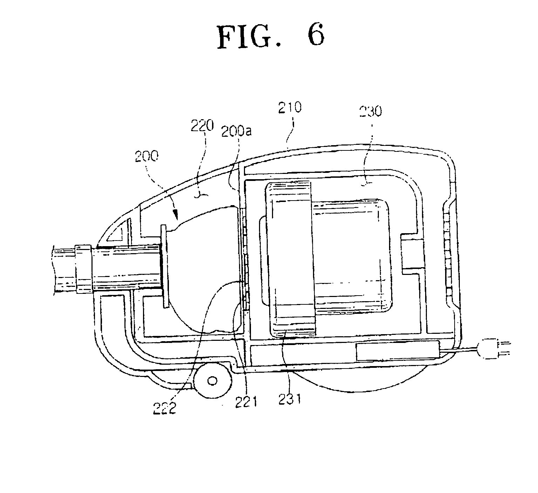

Referring to FIG 6, the dust bag 200 is mounted in the dust collecting chamber 220 of the cleaner body 210. A filter seat 221, where the dust filter is mounted, is provided at the rear side of the dust collecting chamber 220 fluidly communicated with the motor chamber 230 where the motor assembly 231 is mounted. Accordingly, contaminants in air flowing in via a suction brush (not shown) are held and separated by the dust bag 200 and fine dusts in air passing through the dust bag 200 are secondly separated in the dust filter 222. In order to remove bacteria in the dust bag 200, the inner surface 200a of the dust collecting chamber 200 is nano-coated with an antibiosis and sterilization material. The filter seat 221 where the dust filer 222 is mounted is nano-coated with an antibiosis and sterilization material.

In a further embodiment, the entire inner surface of the air path through which contaminant-laden air flows in a vacuum cleaner can be nano-coated with an antibiosis and sterilization material. In other words, the entire inner surface of the path through which air flows from a suction brush to the discharge opening is nano-coated with an antibiosis and sterilization material. As described, an antibiosis and sterilization material such as nano-silver particles can be applied to the inner surface of the air path of a vacuum cleaner through which air flows in any type of vacuum cleaner. A canister type vacuum cleaner will be explained hereinafter as a representative example of a vacuum cleaner.

Referring to FIG 7, a canister type vacuum cleaner 300 comprises a suction brush 310, an extension pipe assembly 320 and a cleaner body 330.

The suction brush 310 directly contacts a cleaning surface, and comprises an air inlet 311 provided at the lower portion of the suction brush and drawing in contaminant-laden air and an air inlet path 312 through which air drawn in by the air inlet 311 flows. The air inlet 311 and the air inlet path 312 form an air path. Accordingly, inner surfaces 311a and 312a of the air inlet 311 and the air inlet path 312 may be nano-coated with an antibiosis and sterilization material.

The extension pipe assembly 320 comprises the extension pipe connected with the suction brush 310 and the flexible hose 322 of which one end is connected to the extension pipe 321 and the other is connected to a dust collecting apparatus (not shown) of the cleaner body 330. The inner surface 321a of the extension pipe 321 and the inner surface 322a of the flexible hose 322 form an air path. Accordingly, the inner surfaces 321 a and 322a of the extension pipe 321 and the flexible hose 322 may be nano-coated with an antibiosis and sterilization material.

The cleaner body 330 is partitioned into the dust collecting chamber 331 where the dust collecting apparatus (not shown) is mounted and the motor chamber 332 where the motor assembly 333 generating a suction force of air is mounted. The dust collecting apparatus mounted in the dust collecting chamber 331 may comprise a bagless dust collecting apparatus, a cyclone dust collecting apparatus, or a dust bag, as mentioned above. The air path and nano-coated surfaces of the dust collecting apparatus may be selected as desired, in accordance with the description herein, and therefore, detailed description thereof will be omitted. The motor chamber 332 forms an air path where air cleaned via the dust collecting apparatus passes and discharges to the outside of the cleaner body 330. An inner surface 332a of the motor chamber 332 forming an air path may be additionally nano-coated with an antibiosis and sterilization material if necessary.

In a vacuum cleaner, by nano-coating substantially the entire inner surfaces of the air path formed from the suction brush 310 to the discharge opening 335 of the cleaner body 330 with an antibiosis and sterilization material, all the bacteria in intake air can be removed as the air passes through the air path, and therefore, the discharged air is substantially pure and without bacteria.

While the invention has been shown and described with reference to certain embodiments thereof, it will be understood by those skilled in the art that various changes in form and details may be made therein without departing from the spirit and scope of the invention as defined by the appended claims.

## Claims

1. A vacuum cleaner comprising
a suction brush having an air inlet;
a dust collecting apparatus in fluid communication with the suction brush and separating and collecting contaminants from intake air;
a motor assembly generating a suction force of air; and
a body comprising a dust collecting apparatus mounting location and a motor assembly mounting location,
wherein at least a surface of an air path of the dust collecting apparatus contacting the intake air drawn via the air inlet is nano-coated with an antibiosis and sterilization material.

2. The vacuum cleaner of claim 1, wherein a surface of the dust collecting apparatus proximate to a filter mounting location is nano-coated with the antibiosis and sterilization material.

3. The vacuum cleaner of claim 1, wherein a surface of the dust collecting apparatus where collected contaminants are accumulated is nano-coated with the antibiosis and sterilization material.

4. The vacuum cleaner of claim 1, wherein when a dust bag is applied to the dust collecting apparatus, an inner surface of the dust collecting apparatus mounting location is nano-coated with the antibiosis and sterilization material.

5. The vacuum cleaner of claim 1, wherein the antibiosis and sterilization material comprises silver.

6. The vacuum cleaner of claim 1, wherein the antibiosis and sterilization material is nano-coated by a chemical vapor deposition (CVD) method.

7. A vacuum cleaner comprising:
a suction brush having an air inlet;
a dust collecting apparatus in fluid communication with the suction brush to separate and collect contaminants from intake air;
a motor assembly generating a suction force; and
a body comprising a dust collecting apparatus mounting location and a motor assembly mounting location,
wherein inner surfaces of the air inlet and air inlet path of the suction brush contacting the air, an inner surface of a path connecting the suction brush and the dust collecting apparatus, and an air path surface of the dust collecting apparatus are nano-coated with an antibiosis and sterilization material.

8. The vacuum cleaner of claim 7, wherein a surface of the motor assembly mounting location in contact with air drawn from the dust collecting apparatus mounting location is nano-coated with the antibiosis and sterilization material.

9. The vacuum cleaner of claim 7, wherein the antibiosis and sterilization material comprises silver.

10. The vacuum cleaner of claim 7, wherein the antibiosis and sterilization material is coated with a chemical vapor deposition (CVD) method.
